# EUROPÄISCHE PATENTSCHRIFT

(11) **EP 1 200 767 B1**
(45) Veröffentlichungstag und Bekanntmachung des Hinweises auf die Patenterteilung: **20.10.2004**
(21) Anmeldenummer: 01957795.6
(22) Anmeldetag: 16.05.2001
(51) Int. Cl.: F16P 3/14

(54) **SCHUTZEINRICHTUNG FÜR MASCHINEN, WIE ABKANTPRESSEN, SCHNEIDEMASCHINEN, STANZMASCHINEN ODER DERGLEICHEN**
PROTECTIVE DEVICE FOR MACHINES SUCH AS BENDING PRESSES, CUTTING MACHINES, PUNCHING MACHINES OR THE LIKE
DISPOSITIF DE PROTECTION POUR MACHINES TELLES QUE PRESSES-PLIEUSES, DECOUPEUSES, MACHINES A ESTAMPER OU ANALOGUES

(30) Priorität: 31.05.2000 DE 10027156
(43) Veröffentlichungstag der Anmeldung: 02.05.2002
(73) Patentinhaber: Fiessler Elektronik OHG, 73734 Esslingen (DE)
(72) Erfinder: FIESSLER, Lutz, 73773 Aichwald (DE)
(74) Vertreter: Vetter, Hans, Dipl.-Phys. Dr.
(86) Internationale Anmeldenummer: PCT/EP2001/005543
(87) Internationale Veröffentlichungsnummer: WO 2001/092777

(56) Entgegenhaltungen:
- EP-A- 0 146 460
- EP-B- 0 264 349
- WO-A-97/25568
- DE-A- 19 717 299
- DE-B- 2 750 234

## Beschreibung

Die Erfindung betrifft eine Schutzeinrichtung für Maschinen, wie Abkantpressen, Schneidemaschinen, Stanzmaschinen oder dergleichen, bei denen ein erstes Maschinenteil Arbeitsbewegungen gegen ein zweites Maschinenteil ausführt, mit einer zwischen den Maschinenteilen positionierten und am bewegbaren Maschinenteil angebrachten Lichtschrankenanordnung, mit einer bei einer Lichtstrahlunterbrechung die Arbeitsbewegung des bewegbaren Maschinenteils stoppenden Stoppeinrichtung und mit einer die Stoppeinrichtung wenigstens unmittelbar vor einer Lichtstrahlunterbrechung durch das andere Maschinenteil deaktivierenden Deaktivierungseinrichtung.

Derartige Schutzeinrichtungen sind in Verbindung mit Abkantpressen beispielsweise aus der DE-PS 2750234, der EP-B-0264347, der EP-A-0146460 oder der DE 19717299 A bekannt. Bei den bekannten Schutzeinrichtungen werden üblicherweise stellungsüberwachende Ventile zur Steuerung der Antriebshydraulik für das bewegbare Maschinenteil eingesetzt. Das Umschalten von der schnelleren Arbeitsbewegung in die langsamere Arbeitsbewegung unterhalb der vorgebbaren Grenzgeschwindigkeit unmittelbar vor Erreichen des anderen Maschinenteils wird durch Veränderung der Ventilstellung der Ventile bewirkt. Sensoren überwachen die Ventilstellung oder andere entsprechende Positionen und bewirken dann bei Erreichen der entsprechenden Position die Deaktivierung der Stoppeinrichtung bzw. der Lichtschrankenanordnung.

Vor allem bei älteren Maschinen müssen hierzu Eingriffe in diese selbst vorgenommen werden, um die erforderlichen Sensoren anzubringen und zu justieren, was konstruktiv aufwendig und arbeitsintensiv ist.

Eine Aufgabe der vorliegenden Erfindung besteht darin, eine Schutzeinrichtung der eingangs genannten Gattung so zu verbessern, daß die Deaktivierung der Stoppeinrichtung in einfacherer Weise durch leicht nachträglich anzubringende äußere Vorrichtungen ohne Justieraufwand bewerkstelligt werden kann.

Diese Aufgabe wird erfindungsgemäß dadurch gelöst, daß eine Geschwindigkeitsmeßeinrichtung für das bewegbare Maschinenteil vorgesehen ist und die Deaktivierungseinrichtung Mittel zur wenigstens teilweisen Deaktivierung der Stoppeinrichtung unterhalb einer vorgebbaren Grenzgeschwindigkeit besitzt, wobei eine Steuervorrichtung für die Arbeitsbewegung des bewegbaren Maschinenteils die Geschwindigkeit unmittelbar vor einer Lichtstrahlunterbrechung durch das andere Maschinenteil unter die Grenzgeschwindigkeit absenkt.

Durch eine reine Geschwindigkeitsüberwachung und -steuerung ist keinerlei Positionsjustierung erforderlich, so daß auch beispielsweise bei nachträglichen Veränderungen der Lichtschrankenanordnung keine Änderung der Deaktivierungsvorrichtung erforderlich ist. Eine Geschwindigkeitsmeßeinrichtung kann in einfacher Weise auch nachträglich leicht außen an der Maschine bzw. außen am bewegbaren Maschinenteil angebracht werden. Die Möglichkeiten für Steuerungsvariationen sind bei der geachwindigkeitsgesteuerten Schutzeinrichtung wesentlich größer.

Durch die in den Unteransprüchen aufgeführten Maßnahmen sind vorteilhafte Weiterbildungen und Verbesserungen der im Anspruch 1 angegebenen Schutzeinrichtung möglich.

In vorteilhafter Weise besitzt die Deaktivierungseinrichtung Mittel zur Deaktivierung der Stoppeinrichtung bei sich voneinander entfernenden Maschinenteilen, also bei erfaßten negativen Geschwindigkeitswerten, da hier keine Gefahr besteht. Dabei besitzt die Deaktivierungseinrichtung bei einer vorteilhaften Variante noch Mittel zur Speicherung derjenigen Position, an der die Grenzgeschwindigkeit bei der Arbeitsbewegung unterschritten wird, sowie zur Deaktivierung der Stoppeinrichtung, bis diese Position bei der Rückbewegung des bewegbaren Maschinenteils wieder erreicht wird. Hierdurch wird verhindert, daß die Deaktivierungseinrichtung bzw. Lichtschrankenanordnung aktiviert wird, wenn das bewegbare Maschinenteil bei der Rückbewegung noch vor Erreichen der gespeicherten Position stoppt, was ansonsten zur Aktivierung der Lichtschrankenanordnung und zur entsprechenden Auslösung einer unerwünschten Funktion führen würde.

Zur Erhöhung der Sicherheit besitzt die Geschwindigkeitsmeßeinrichtung wenigstens zwei unabhängig voneinander arbeitende und an verschiedenen Stellen angeordnete Meßmodule, insbesondere an zwei entgegengesetzten Endbereichen des bewegbaren Maschinenteils. Diese erhöhte Sicherheit wird insbesondere durch eine Vergleichseinrichtung für die Meßwerte der Meßmodule erreicht und durch Mittel der Deaktivierungseinrichtung zur Verhinderung einer Deaktivierung der Stoppeinrichtung bei um mehr als einer vorgebbaren Toleranz voneinander abweichenden Meßwerten. Zusätzlich kann bei voneinander abweichenden Meßwerten in vorteilhafter Weise eine vollständige Arbeitsbewegung des bewegbaren Maschinenteils verhindert werden, was ebenfalls zur Erhöhung der Sicherheit beiträgt.

In einer vorteilhaften Ausgestaltung sind Mittel zur automatischen Erfassung des Nachlaufwegs des bewegbaren Maschinenteils nach einem Stoppsignal wenigstens bei der ersten Arbeitsbewegung vorgesehen, wobei die Deaktivierungseinrichtung Mittel zur Verhinderung einer Deaktivierung der Stoppeinrichtung bei Überschreitung eines vorgebbaren maximal zulässigen Nachlaufwegs besitzt. Auch diese Maßnahme trägt zur Erhöhung der Sicherheit bei, und auch hier kann zusätzlich eine vollständige Arbeitsbewegung des bewegbaren Maschinenteils verhindert werden.

Die Mittel zur automatischen Erfassung des Nachlaufwegs können diese Erfassung zweckmäßigerweise so lange wiederholen, insbesondere jeweils bei aufeinanderfolgenden Arbeitsbewegungen, bis ein zulässiger Nachlaufweg festgestellt wird. Hierdurch wird der Betrieb der Maschine bei zu großem Nachlaufweg wirksam verhindert.

Die Geschwindigkeitsmeßeinrichtung besitzt vorzugsweise wenigstens ein das einen Winkelschrittgeber mit Seilzug und/oder einen die Bewegung eines Magnetstreifens erfassenden Induktivsensor aufweist, wobei vorzugsweise eine Differenziereinrichtung zur Umwandlung von Wegsignalen in Geschwindigkeitssignale vorgesehen ist. Somit können Positionssignale und Geschwindigkeitssignale durch dasselbe Meßmodul erzeugt werden.

Ein Ausführungsbeispiel der Erfindung ist in der Zeichnung dargestellt und in der nachfolgenden Beschreibung näher erläutert. Es zeigen:
- Fig. 1: eine schematische Darstellung einer mit einer geschwindigkeitsgesteuerten Schutzeinrichtung versehenen Abkantpresse in der Längsseitenansicht als Ausführungsbeispiel der Erfindung,
- Fig. 2: ein schematisches Blockschaltbild zur Erläuterung der Wirkungsweise und
- Fig. 3: eine schematische Darstellung einer Lichtschrankenanordnung mit 3 Lasterstrahlen.

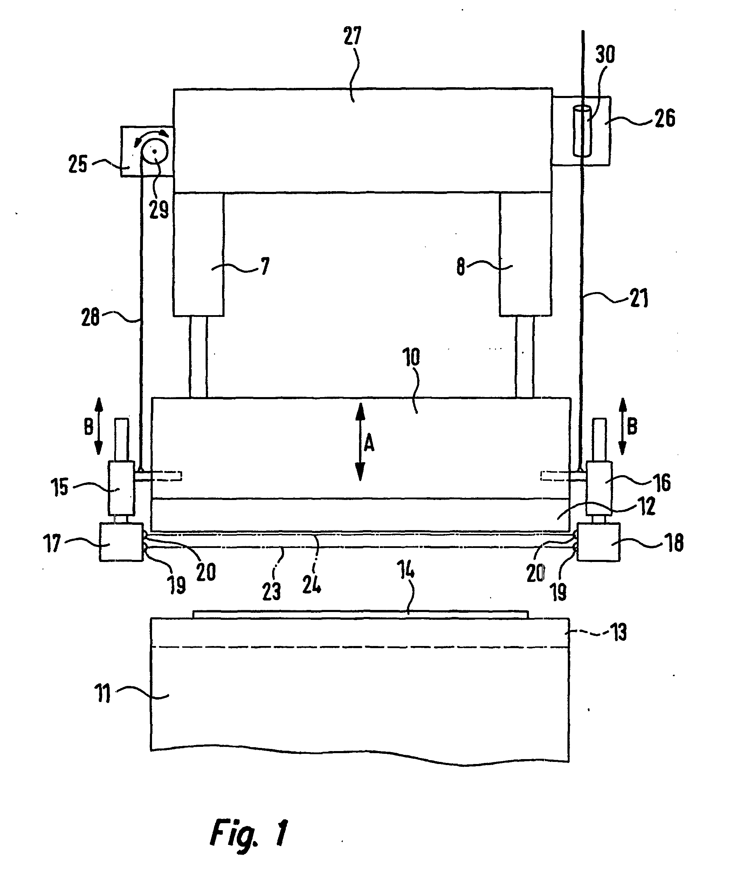

Die in Fig. 1 dargestellte Abkantpresse besteht im wesentlichen aus einem Oberwerkzeug 10, das mittels Hydraulikzylindern 7, 8 gegen ein feststehendes Unterwerkzeug 11 bewegbar ist. Die gegensinnige Arbeitsbewegungsrichtung A ist mit einem Doppelpfeil gekennzeichnet. Selbstverständlich kann bei einer alternativen Ausführung auch das Oberwerkzeug feststehend und das Unterwerkzeug bewegbar ausgebildet sein. Das plattenartige, langgestreckte Oberwerkzeug 10 besitzt einen Arbeitsbereich 12 mit keilförmigem Querschnitt, während das Unterwerkzeug 11 eine entsprechende keilförmige Rinne 13 besitzt, in die der Arbeitsbereich 12 bei der Arbeitsbewegung eingreift und dadurch das auf dem Unterwerkzeug 11 liegende zu bearbeitende Blech 14 biegt bzw. abkantet.

Die übrigen Bereiche der an sich bekannten Abkantpresse sind zur Vereinfachung nicht dargestellt. Im eingangs angegebenen Stand der Technik sind weitere Details einer solchen Abkantpresse beschrieben. Die Querschnittsgestalt des Arbeitsbereichs 12 und der Rinne 13 kann selbstverständlich variieren.

Jeweils an den einander entgegengesetzten Schmalseiten des Oberwerkzeugs 10 sind Führungen 15, 16 befestigt, in denen Halterungen 17, 18 für Lichtschranken 19, 20 in einer vertikalen Einstellbewegung bewegbar sind, deren Richtung durch Doppelpfeile B dargestellt ist und die der Arbeitsbewegungsrichtung A entspricht. Jede der Lichtschranken 19, 20 besteht in an sich bekannter Weise aus einem Laser-Sender und einem Laser-Empfänger, wobei zur Reduktion der Zahl der Sender auch Strahlteiler oder Strahlspreizvorrichtungen eingesetzt werden können, wie dies insbesondere in der DE 19717299 A näher beschrieben ist.

Die erste Lichtschranke 19 und die zweite Lichtschranke 20 sind übereinander so angeordnet, daß sie im wesentlichen in der Bewegungsebene der Biegelinie, also der Spitze des Arbeitsbereichs 12 des Oberwerkzeugs 10, liegen. Dabei dient die Lichtschranke 19 primär als Schutzlichtschranke, während die Lichtschranke 20 primär als Justierlichtschramke dient und zwischen der Lichtschranke 19 und dem Oberwerkzeug 10 angeordnet ist. Weitere parallel zur Arbeitsbewegungsrichtung A zwischen diesen beiden Lichtschranken 19, 20 oder senkrecht zur Arbeitsbewegungsrichtung A angeordnete Lichtschranken, können ebenfalls vorgesehen sein, wie dies im eingangs angegebenen Stand der Technik näher beschrieben ist. Anstelle von Laser-Lichtschranken können selbstverständlich auch andere bekannte Arten von Lichtschranken oder andere optische Schutzeinrichtungen eingesetzt werden.

Die Schutzwirkung der Lichtschrankenanordnung besteht darin, daß die Schließbewegung zwischen Oberwerkzeug 10 und Unterwerkzeug 11 abrupt gestoppt wird, wenn einer der Laserstrahlen 23, 24 der Lichtschranken 19, 20 unterbrochen wird, wenn also ein Gegenstand in die Bewegungsbahn gelangt. Da derartige Abkantpressen oder ähnliche Maschinen üblicherweise handbedient sind, besteht vor allem die Gefahr, daß die Hand oder der Arm einer Bedienungsperson in die Arbeitsbewegungsbahn gelangt, was zu einem Einklemmen oder Abtrennen durch die Schließbewegung führen könnte. Da das Anhalten der Schließbewegung nur nach einem bestimmten Bremsweg erfolgen kann, sollte der Abstand zwischen dem Laserstrahl 23 und dem Laserstrahl 24 so bemessen sein, dass ein Gegenstand, der in die Bewegungsbahn gelangt ist, nicht eingeklemmt wird. Er beträgt beispielsweise 10 bis 20 mm. Bezüglich der Beschreibung der Justierung der Lichtschrankenanordnung wird auf den eingangs angegebenen Stand der Technik verwiesen, da diese Justierung nicht Gegenstand der vorliegenden Erfindung ist.

Eine Geschwindigkeitsmeßeinrichtung für die Geschwindigkeit des Oberwerkzeugs 10 besteht aus zwei Meßmodulen 25, 26, die an einem schematisch dargestellten Maschinengestell 27 ortsfest angebracht sind. Dieses Maschinengestell 27 trägt auch die Hydraulikzylinder 7, 8 zur Bewegung des Oberwerkzeugs 10.

Das linke Meßmodul 25 ist als Winkelschrittgeber ausgebildet, bei dem ein an der Führung 15, also am Oberwerkzeug 10, fixiertes Seil 28 bei der Bewegung des Oberwerkzeugs 10 auf einer Rolle 29 auf- bzw. abgewickelt wird. Die Drehbewegung der Rolle 29 wird durch einen an sich bekannten Winkelschrittsensor bzw. Drehsensor erfaßt. Die Drehbewegung der Rolle 29 ist ein Maß für die Bewegungsgeschwindigkeit des Oberwerkzeugs 10.

Das rechte Meßmodul 26 besitzt einen Induktivsensor 30, durch den bei der Bewegung des Oberwerkzeugs 10 ein daran bzw. an der Führung 16 befestigtes Magnetmaßband 21 hindurch- oder vorbeibewegt wird. Anstelle der bechriebenen Meßeinrichtungen können auch andere Einrichtungen treten, z.B. ein Induktivsensor mit einem Lochbandblech oder einer Zahnstange, ein Linearpotentiometer oder ein lichtdurchlässiger Maßstab mit Lichtschranke.

Beim in Fig. 1 dargestellten Ausführungsbeispiel sind zwei unterschiedliche Meßmodule 25, 26 zur Erfassung der Geschwindigkeit des Oberwerkzeugs 10 dargestellt, wobei in der Praxis jedoch zwei gleiche Meßmodule eingesetzt werden. Die unterschiedliche Darstellung der Meßmodule 25, 26 soll lediglich darstellen, daß unterschiedliche Arten von Meßmodulen zur Erfassung der Geschwindigkeit des Oberwerkzeugs 10 eingesetzt werden können. Neben den beiden Ausführungen von Meßmodulen können selbstverständlich auch andere Geschwindigkeits-Meßmodule verwendet werden, die nach anderen bekannten Prinzipien zur Erfassung der Geschwindigkeit arbeiten. Im einfachsten Falle kann auch nur ein einziges Meßmodul zur Erfassung der Geschwindigkeit vorgesehen sein.

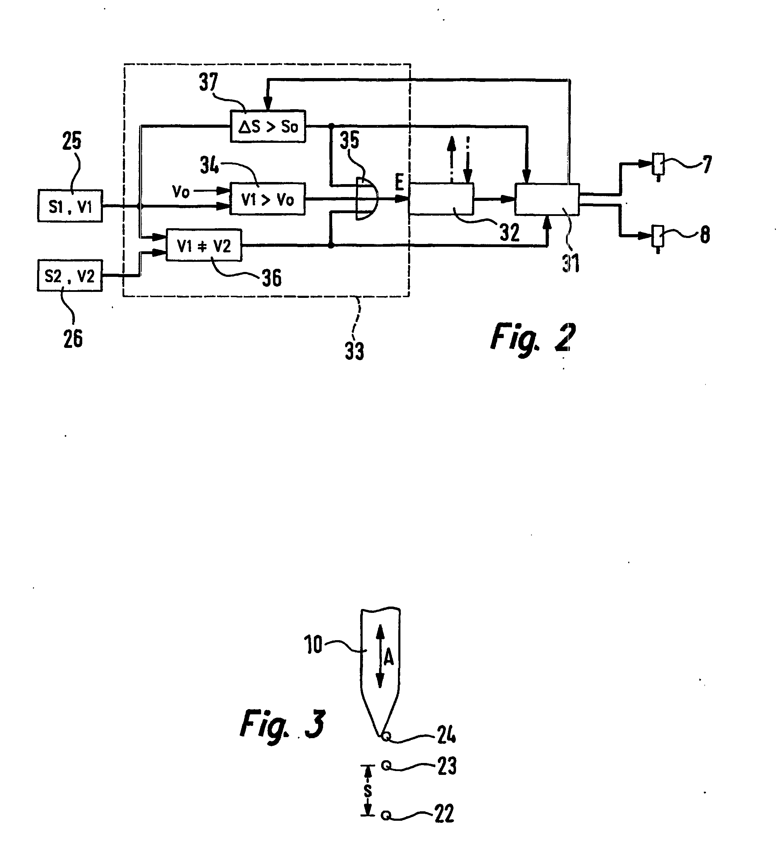

Die Wirkungsweise der Schutzeinrichtung für die in Fig. 1 dargestellte Abkantpresse wird im folgenden anhand des in Fig. 2 dargestellten Blockschaltbilds erläutert. Eine elektronische Steuervorrichtung 31 steuert die beiden Hydraulikzylinder 7, 8 und damit die Bewegung des Oberwerkzeugs 10. Diese Steuereinrichtung 31 bewegt das Oberwerkzeug zunächst mit hoher Geschwindigkeit bis unmittelbar an das Unterwerkzeug 11 bzw. das zu bearbeitende Blech 14 heran und schaltet dann auf eine langsame Arbeitsgeschwindigkeit um, mit der dieses Blech 14 verformt wird. Die Umschaltung auf die langsame Arbeitsgeschwindigkeit erfolgt dabei in einem Abstand zwischen Oberwerkzeug 10 und Unterwerkzeug 11, bei dem der Lichtstrahl 23 noch nicht durch das Blech 14 oder das Unterwerkzeug 11 unterbrochen wird, so daß eine lichtschrankengesteuerte Stoppeinrichtung 32 zum Zeitpunkt des Umschaltens auf die niedrigere Arbeitsgeschwindigkeit noch nicht auf Grund einer Unterbrechung des Lichtstrahls 23 oder eines anderen Lichtstrahls die Arbeitsbewegung des Oberwerkzeugs 10 abrupt stoppt. Um dies auch während der langsamen Arbeitsbewegung zu verhindern, bei der ein Körperteil aufgrund der geringen Schließgeschwindigkeit (= 10 mm/s) noch vor dem Einklemmen zurückgezogen werden kann und bei der die Lichtstrahlen der Lichtstrahlanordnung durch das Blech 14 und/oder das Unterwerkzeug 11 unterbrochen werden, wird die Stoppeinrichtung 32 durch eine Deaktivierungs-einrichtung 33 deaktiviert, die eine GeschwindigkeitsVergleichseinrichtung 34 besitzt. In dieser wird die gemessene Geschwindigkeit V1 des Oberwerkzeugs 10 mit einer unteren Grenzgeschwindigkeit Vo verglichen, die bei der langsamen Arbeitsgeschwindigkeit unterschritten wird. Die Stoppeinrichtung 32 ist somit nur dann eingeschaltet bzw. aktiviert, wenn die Geschwindigkeit V1 des Oberwerkzeugs 10 größer als die untere Grenzgeschwindigkeit Vo ist. Nur in diesem Falle erzeugt die Geschwindigkeits-Vergleichseinrichtung 34 ein Ausgangssignal, durch das über ein ODER-Glied 35 die Stoppeinrichtung 32 aktiviert wird, was im umgekehrten Falle bedeutet, daß sie unterhalb dieser Grenzgeschwindigkeit oder bei negativer Geschwindigkeit, also bei der Aufwärtsbewegung des Oberwerkzeugs 10, deaktiviert ist.

Die Geschwindigkeits-Vergleichseinrichtung 34 bewirkt somit, daß mit dem Umschalten auf die niedrige Arbeitsgeschwindigkeit automatisch die Stoppeinrichtung 32 deaktiviert wird und während der Aufwärtsbewegung des Oberwerkzeugs 10, also bei der Rückbewegung, deaktiviert bleibt.

Bei manchen Bearbeitungsvorgängen wird das Oberwerkzeug innerhalb des Sicherheitsabstandes, ab dem die Umschaltung auf die niedrigere Arbeitsgeschwindigkeit erfolgt ist, nochmals zurückgesetzt, um dann eine erneute Arbeitsbewegung gegen das Unterwerkzeug auszuführen. Hierbei muß sichergestellt sein, daß bei Bewegungen innerhalb dieses Sicherheitsabstands die Stoppeinrichtung 32 deaktiviert bleibt, was beispielsweise durch Speicherung derjenigen Position erfolgen kann, bei der die Umschaltung auf die niedrigere Arbeitsgeschwindigkeit erfolgt ist. Erst bei Überschreiten dieser gespeicherten Position kann die Stoppeinrichtung 32 prinzipiell wieder aktiviert werden. Wenn bei der Aufwärtsbewegung des Oberwerkzeugs die Stoppeinrichtung 32 ohnehin nicht aktiviert wird, dann kann diese Forderung automatisch erfüllt werden.

Die Anordnung von zwei Meßmodulen 25, 26 dient zur Erhöhung der Betriebssicherheit. In der Deaktivierungseinrichtung 33 ist eine Vergleichseinrichtung 36 zum Vergleich der Geschwindigkeitssignale V1 und V2 der beiden Meßmodule 25, 26 vorgesehen. Wenn diese Meßsignale ungleich sind, so bleibt die Stoppeinrichtung 32 durch das Ausgangssignal dieser Vergleichseinrichtung 36 über das ODER-Glied 35 ständig aktiviert. Gleichzeitig wird die Steuereinrichtung 31 für die Hydraulikzylinder 7, 8 durch dieses Ausgangssignal so angesteuert, daß ein vollständiger Arbeitshub des Oberwerkzeugs 10 verhindert wird. Diese Sicherheitsmaßnahme bleibt so lange erhalten, bis die Signale V1 und V2 wieder übereinstimmen, also bis wieder eine zuverlässige Geschwindigkeitserfassung vorliegt.

Schließlich enthält die Deaktivierungseinrichtung 33 noch eine Überwachungsstufe 37 zur Überwachung eines maximal zulässigen Nachlaufwegs des Oberwerkzeugs 10 nach einem Stoppbefehl. Dieser maximale Nachlaufweg beträgt beispielsweise 10 mm. Nach dem Einschalten der elektronischen Steuereinrichtung 31 erzeugt diese beispielsweise bei der ersten Arbeitsbewegung ein Prüfsignal für die Überwachungsstufe 37. Durch dieses Prüfsignal wird die augenblickliche Position des Oberwerkzeugs 10 gespeichert, und gleichzeitig wird durch die Steuereinrichtung 31 ein Stoppvorgang für das Oberwerkzeug 10 ausgelöst. Am Ende des Stoppvorgangs wird wieder die Position des Oberwerkzeugs 10 erfaßt und die Differenz, also den Nachlaufweg ΔS ermittelt. Dieser Nachlaufweg ΔS wird mit dem gespeicherten maximalen Nachlaufweg So verglichen. Bei zu großem Nachlaufweg ΔS wird über das ODER-Glied 35 die Stoppeinrichtung 33 aktiviert und aktiviert gehalten. Gleichzeitig bewirkt das entsprechende Ausgangssignal der Überwachungsstufe 37 an der Steuereinrichtung 31 die Ausführung einer vollständigen Arbeitsbewegung. In diesem Falle löst die Steuereinrichtung 31 einen weiteren Meßvorgang für den weiteren Nachlaufweg bei derselben oder bei wenigstens einer darauffolgenden Arbeitsbewegung aus. Erst wenn ein korrekter Nachlaufweg festgestellt wird, kann das Ausgangssignal der Überwachungsstufe 37 wieder abgeschaltet bzw. deaktiviert werden.

Die beschriebenen Meßmodule 25, 26 können sowohl zur Erfassung von Positionssignalen als auch zur Erfassung von Geschwindigkeitssignalen dienen, wobei die Geschwindigkeitssignale durch Differenzierung der Wegsignale gewonnen werden können.

In Figur 3 ist eine Teilansicht des Oberwerkzeugs 10 in der Stirnansicht bzw. im Schnitt dargestellt, wobei eine erweiterte Lichtschrankenanordnung drei übereinander angeordnete Laserstrahlen 22 bis 24 besitzt..Die Lichtschranken 19, 20 können in dieser Lichtschrankenanordnung selbstverständlich enthalten sein.

Gegenüber den bereits beschriebenen Laserstrahlen 23, 24 ist der Laserstrahl 22 weiter vom Oberwerkzeug 10 entfernt, also näher zum Unterwerkzeug 11 hin versetzt. Der Abstand zwischen den Laserstrahlen 22, 23 beträgt s. In einer modifizierten Ausführungsform des in Figur 2 dargestellten Blockschaltbilds wird in Zusammenwirkung mit der in Figur 3 dargestellten Anordnung mit dem Umschalten auf die niedrigere Arbeitsgeschwindigkeit unterhalb der Grenzgeschwindigkeit Vo die Stoppeinrichtung 32 nicht vollständig deaktiviert, sondern lediglich bezüglich des Laserstrahls 22. Eine Unterbrechung dieses Laserstrahls 22 kann nach dieser Teildeaktivierung nicht mehr die Stoppeinrichtung 32 auslösen. Erst wenn das Oberwerkzeug 10 nach dem Umschalten auf die langsame Arbeitsgeschwindigkeit noch eine vorgebbare Wegstrecke zurückgelegt hat, die der Wegstrecke s entspricht oder kleiner ist, erfolgt eine vollständige Deaktivierung der Stoppeinrichtung 32, so daß diese jetzt durch keine Unterbrechung einer der Laserstrahlen 22 - 24 mehr ausgelöst werden kann.

Der Abstand zwischen dem Laserstrahl 23 und dem Laserstrahl 24 bzw. dem Oberwerkzeug 10 beträgt beispielsweise 10 mm oder weniger. Die Wegstrecke s beträgt 5 bis 15 mm und bildet daher einen Schutz gegen einen langen Bremsweg. s wird entsprechend dem Bremsweg ausgelegt, so daß das Oberwerkzeug in jedem Falle die langsame Arbeitsgeschwindigkeit eingenommen hat, bevor der Lasterstrahl 23 durch das Unterwerkzeug 11 oder das Werkstück unterbrochen wird. Der Abstand zwischen den Laserstrahlen 23 und 24 wird so gering bemessen, dass keine Gefahr besteht, daß ein Körperteil doch in einen entsprechend kleinen verbleiben Schlitz eingreifen kann.

Die beschriebene Schutzeinrichtung ist selbstverständlich nicht auf Abkantpressen und Schneidemaschinen beschränkt, sondern kann überall dort eingesetzt werden, wo zwei Maschinenteile Arbeitsbewegungen gegeneinander ausführen, so daß dazwischen sich befindliche Körperteile verletzt werden können. Darüber hinaus wird selbstverständlich auch ein Schutz der Maschine oder der Maschinenteile durch die Sicherheitsabschaltung erreicht, wenn andere Gegenstände in die Bewegungsbahn gelangen, die diese Maschinenteile oder Werkzeuge beschädigen könnten. Die erfindungsgemäße Schutzeinrichtung kann beispielsweise auch für Stanzmaschinen, sich schließende Türen oder Klappen oder Schieber, Hobelmaschinen oder dergleichen eingesetzt werden.

## Patentansprüche

1. Schutzeinrichtung für Maschinen, wie Abkantpressen, Schneidemaschinen, Stanzmaschinen oder dergleichen, bei denen ein erstes Maschinenteil Arbeitsbewegungen gegen ein zweites Maschinenteil ausführt, mit einer zwischen den Maschinenteilen positionierten und am bewegbaren Maschinenteil angebrachten Lichtschrankenanordnung, mit einer bei einer Lichtstrahlunterbrechung die Arbeitsbewegung des bewegbaren Maschinenteils stoppenden Stoppeinrichtung und mit einer die Stoppeinrichtung wenigstens unmittelbar vor einer Lichtstrahlunterbrechung durch das andere Maschinenteil deaktivierenden Deaktivierungseinrichtung, **dadurch gekennzeichnet, daß** eine Geschwindigkeitsmeßeinrichtung (25, 26) für das bewegbare Maschinenteil (10) vorgesehen ist und die Deaktivierungseinrichtung (33) Mittel (34) zur wenigstens teilweisen Deaktivierung der Stoppeinrichtung (32) unterhalb einer vorgebbaren Grenzgeschwindigkeit (Vo) besitzt, wobei eine Steuervorrichtung (31) für die Arbeitsbewegung des bewegbaren Maschinenteils (10) die Geschwindigkeit unmittelbar vor einer Lichtstrahlunterbrechung durch das andere Maschinenteil (11) unter die Grenzgeschwindigkeit (Vo) absenkt.

2. Schutzeinrichtung nach Anspruch 1, **dadurch gekennzeichnet, daß** die Deaktivierungseinrichtung (33) Mittel (34) zur Deaktivierung der Stoppeinrichtung(32) bei sich voneinander entfernenden Maschinenteilen besitzt.

3. Schutzeinrichtung nach Anspruch 2, **dadurch gekennzeichnet, daß** die Deaktivierungseinrichtung (33) Mittel zur Speicherung derjenigen Position besitzt, an der die Grenzgeschwindigkeit bei der Arbeitsbewegung unterschritten wird, sowie zur Deaktivierung der Stoppeinrichtung (32), bis diese Position bei der Rückbewegung des bewegbaren Maschinenteils (10) wieder erreicht wird.

4. Schutzeinrichtung nach einem der vorhergehenden Ansprüche, **dadurch gekennzeichnet, daß** die Geschwindigkeitsmeßeinrichtung (25, 26) wenigstens zwei unabhängig voneinander arbeitende und an verschiedenen Stellen angeordnete Meßmodule besitzt, insbesondere an zwei entgegengesetzten Endbereichen des bewegbaren Maschinenteils (10).

5. Schutzeinrichtung nach Anspruch 4, **dadurch gekennzeichnet, daß** eine Vergleichseinrichtung (36) für die Meßwerte der Meßmodule der Geschwindigkeitsmeßeinrichtung (25, 26) vorgesehen ist, und daß die Deaktivierungseinrichtung (33) Mittel zur Verhinderung einer Deaktivierung der Stoppeinrichtung (32) bei um mehr als eine vorgebbare Toleranz voneinander abweichenden Meßwerten (V1, V2) besitzt.

6. Schutzeinrichtung nach Anspruch 5, **dadurch gekennzeichnet, daß** Mittel zur Verhinderung einer vollständigen Arbeitsbewegung des bewegbaren Maschinenteils (10) bei um mehr als eine vorgebbare Toleranz voneinander abweichenden Meßwerten vorgesehen sind.

7. Schutzeinrichtung nach einem der vorhergehenden Ansprüche, **dadurch gekennzeichnet, daß** Mittel (37) zur automatischen Erfassung des Nachlaufwegs (ΔS) des bewegbaren Maschinenteils (10) nach einem Stoppsignal wenigstens bei der ersten Arbeitsbewegung vorgesehen sind, und daß die Deaktivierungseinrichtung (33) Mittel zur Verhinderung einer Deaktivierung der Stoppeinrichtung (32) bei Überschreitung eines vorgebbaren maximal zulässigen Nachlaufwegs (So) besitzt.

8. Schutzeinrichtung nach Anspruch 7, **dadurch gekennzeichnet, daß** Mittel zur Verhinderung einer vollständigen Arbeitsbewegung des bewegbaren Maschinenteils (10) bei Überschreitung eines vorgebbaren maximal zulässigen Nachlaufwegs (So) vorgesehen sind.

9. Schutzeinrichtung nach Anspruch 7 oder 8, **dadurch gekennzeichnet, daß** die Mittel (37) zur automatischen Erfassung des Nachlaufwegs diese Erfassung so lange wiederholen, insbesondere jeweils bei aufeinanderfolgenden Arbeitsbewegungen, bis ein zulässiger Nachlaufweg festgestellt wird.

10. Schutzeinrichtung nach einem der vorhergehenden Ansprüche, **dadurch gekennzeichnet, daß** die Geschwindigkeitsmeßeinrichtung (25, 26) wenigstens ein Meßmodul besitzt, das einen Winkelschrittgeber (29) mit Seilzug (28) und/oder einen die Bewegung eines Magnetstreifens (21), eines Lochbandblechs oder einer Zahnstange erfassenden Induktivsensor (30) und/oder einen lichtdurchlässigen Maßstab mit Lichtschranke und/oder ein Linearpotentiometer aufweist, wobei vorzugsweise eine Differenziereinrichtung zur Umwandlung von Wegsignalen in Geschwindigkeitssignale vorgesehen ist.

11. Schutzeinrichtung nach einem der vorhergehenden Ansprüche, **dadurch gekennzeichnet, dass** Mittel zur Verhinderung einer Auslösung der Stoppeinrichtung (32) bei Unterbrechung des am weitesten vom bewegbaren Maschinenteil (10) angeordneten Lichtstrahls (22) der Lichtschrankenanordnung unterhalb der vorgebbaren Grenzgeschwindigkeit vorgesehen sind, wobei eine vollständige Deaktivierung der Stoppeinrichtung (32) erst nach Zurücklegung einer vorgebbaren Wegstrecke (s) durch das bewegbare Maschinenteil (10) nach der Umschaltung seiner Arbeitsgeschwindigkeit unter die Grenzgeschwindigkeit (Vo) erfolgt.

12. Schutzeinrichtung nach Anspruch 11, **dadurch gekennzeichnet, dass** die vorgebbare Wegstrecke (s) dem Abstand zwischen dem am weitesten vom bewegbaren Maschinenteil (10) entfernten Lichtstrahl (22) und dem nächstnäheren (23) entspricht oder kleiner ist.

## Claims

1. Safety device for machines such as press brakes, cutting machines, stamping machines or the like, in which a first machine part executes operating movements against a second machine part, with a photoelectric barrier unit positioned between the machine parts and attached to the movable machine part, with a stop device for stopping the operating movement of the movable machine part in the event of interruption of the light beam, and with a deactivation device for deactivating the stop device at least immediately before interruption of the light beam by the other machine part, **characterised in that** a speed measuring device (25, 26) for the movable machine part (10) is provided and the deactivation device (33) has means (34) for at least partial deactivation of the stop device (32) below a presettable limit speed (Vo), wherein a control unit (31) for the operating movement of the movable machine part (10) lowers the speed below the limit speed (Vo) immediately before interruption of the light beam by the other machine part (11).

2. Safety device according to claim 1, **characterised in that** the deactivation device (33) has means (34) to deactivate the stop device (32) when the machine parts are separated from one another.

3. Safety device according to claim 2, **characterised in that** the deactivation device (33) has means for memorising those positions at which the limit speed is not reached during the operating movement, and for deactivating the stop device (32) until this position is reached once again on the return movement of the movable machine part (10).

4. Safety device according to any of the preceding claims, **characterised in that** the speed measuring device (25, 26) has at least two measuring modules operating independently of one another and located at different points, in particular at two opposite end sections of the movable machine part (10).

5. Safety device according to claim 4, **characterised in that** a comparator (36) for the measured values of the measuring modules of the speed measuring device (25,26) is provided, and that the deactivation device (33) has means of preventing deactivation of the stop device (32) if measured values (V1, V2) differ from one another by more than a presettable tolerance.

6. Safety device according to claim 5, **characterised in that** means are provided for preventing a complete operating movement of the movable machine part (10) if measured values differ from one another by more than a presettable tolerance.

7. Safety device according to any of the preceding claims, **characterised in that** means (37) are provided for automatic detection of the overtravel (ΔS) of the movable machine part (10) after a stop signal, at least during the first operating movement, and that the deactivation device (33) has means of preventing deactivation of the stop device (32) if a presettable maximum overtravel distance (So) is exceeded.

8. Safety device according to claim 7, **characterised in that** means are provided for preventing a complete operating movement of the movable machine part (10) if a presettable maximum overtravel distance (So) is exceeded.

9. Safety device according to claim 7 or 8, **characterised in that** the means (37) for automatic detection of overtravel repeat this detection, in particular for each consecutive operating movement, until a permissible overtravel distance is detected.

10. Safety device according to any of the preceding claims, **characterised in that** the speed measuring device (25, 26) has at least one measuring module with an angular step transducer (29) with cable control (28) and/or an inductive sensor (30) detecting the movement of a magnetic strip (21), a punched-tape sheet or a rack and/or a light-transmitting measuring scale with photoelectric barrier and/or a linear potentiometer, wherein preferably a differentiator is provided to convert distance travelled signals into speed signals.

11. Safety device according to any of the preceding claims, **characterised in that** means are provided for preventing activation of the stop device (32) when the light beam (22) of the photoelectric barrier unit located furthest from the movable machine part (10) is interrupted below the presettable limit speed, wherein complete deactivation of the stop device (32) is effected only after the movable machine part (10) has covered a presettable distance(s) after its operating speed has been switched below the limit speed (Vo).

12. Safety device according to claim 11, **characterised in that** the presettable distance covered(s) corresponds to or is less than the distance between the light beam (22) which is furthest from the movable machine part (10) and the next nearest light beam (23).

## Revendications

1. Dispositif de protection pour machines, telles que presses-plieuses, machines de coupe, machines à estamper ou similaires, dans lesquelles une première partie de machine exécute des mouvements de travail par rapport à une deuxième partie de machine, comportant un dispositif à barrière lumineuse positionné entre les parties de la machine et disposé sur la partie de machine déplaçable, comportant un dispositif d'arrêt interrompant le mouvement de travail de la partie de machine déplaçable, en cas d'interruption du rayon lumineux, et comportant un dispositif de désactivation désactivant le dispositif d'arrêt au moins immédiatement avant une interruption du rayon lumineux par l'autre partie de machine, **caractérisé en ce qu'**il est prévu un dispositif de mesure de la vitesse (25, 26) pour la partie de machine déplaçable (10), et le dispositif de désactivation (33) comporte des moyens (34) pour la désactivation au moins partielle du dispositif d'arrêt (32) au-dessous d'une vitesse limite (Vo) pouvant être prédéfinie, tandis qu'un dispositif de commande (31), pour le mouvement de travail de la partie de machine déplaçable (10), abaisse la vitesse immédiatement avant une interruption du rayon lumineux par l'autre partie de machine (11), au-dessous de la vitesse limite (Vo).

2. Dispositif de protection selon la revendication 1, **caractérisé en ce que** le dispositif de désactivation (33) comporte des moyens (34) pour désactiver le dispositif d'arrêt (32) lorsque les parties de machine s'éloignent l'une de l'autre.

3. Dispositif de protection selon la revendication 2, **caractérisé en ce que** le dispositif de désactivation (33) comporte des moyens pour mémoriser la position dans laquelle la vitesse limite est sous-dépassée lors du mouvement de travail, ainsi que pour désactiver le dispositif d'arrêt (32) jusqu'à ce que cette position soit à nouveau atteinte lors du mouvement de retour de la partie de machine déplaçable (10).

4. Dispositif de protection selon l'une des revendications précédentes, **caractérisé en ce que** le dispositif de mesure de vitesse (25, 26) comporte au moins deux modules de mesure travaillant indépendamment l'un de l'autre et disposés en des points différents, en particulier dans deux zones d'extrémité opposées de la partie de machine déplaçable (10).

5. Dispositif de protection selon la revendication 4, **caractérisé en ce qu'**il est prévu un dispositif de comparaison (36) pour les valeurs de mesure des modules de mesure du dispositif de mesure de vitesse (25, 26), et **en ce que** le dispositif de désactivation (33) comporte des moyens pour empêcher une désactivation du dispositif d'arrêt (32) en cas de valeurs de mesure (V1, V2) s'écartant l'une de l'autre de plus d'une valeur de tolérance pouvant être prédéfinie.

6. Dispositif de protection selon la revendication 5, **caractérisé en ce que** sont prévus des moyens destinés à empêcher un mouvement de travail complet de la partie de machine déplaçable (10), en cas de valeurs de mesure s'écartant l'une de l'autre de plus d'une valeur de tolérance pouvant être prédéfinie.

7. Dispositif de protection selon l'une des revendications précédentes, **caractérisé en ce que** sont prévus des moyens (37) pour l'enregistrement automatique de la distance de ralentissement (ΔS) de la partie de machine déplaçable (10) après un signal d'arrêt, au moins lors du premier mouvement de travail, et **en ce que** le dispositif de désactivation (33) comporte des moyens pour empêcher une désactivation du dispositif d'arrêt (32) lorsqu'est dépassée une distance de ralentissement maximale admissible (So) qui peut être prédéfinie.

8. Dispositif de protection selon la revendication 7, **caractérisé en ce que** sont prévus des moyens pour empêcher un mouvement de travail complet de la partie de machine déplaçable (10) lorsqu'est dépassée une distance de ralentissement maximale admissible (So) qui peut être prédéfinie.

9. Dispositif de protection selon la revendication 7 ou 8, **caractérisé en ce que** les moyens (37) d'enregistrement automatique de la distance de ralentissement répétent cet enregistrement jusqu'à ce qu'en particulier, lors de mouvements de travail successifs, une distance de ralentissement admissible soit constatée.

10. Dispositif de protection selon l'une des revendications précédentes, **caractérisé en ce que** le dispositif de mesure de vitesse (25, 26) possède au moins un module de mesure qui comporte un capteur de pas angulaire (29) avec câble de traction (28) et/ou un capteur inductif (30) détectant le mouvement d'une bande magnétique (21), d'une bande de tôle perforée ou d'une crémaillère, et/ou une barre graduée perméable à la lumière avec barrière lumineuse et/ou un potentiomètre linéaire, un dispositif de différenciation étant prévu de préférence pour la conversion de signaux de distance en signaux de vitesse.

11. Dispositif de protection selon l'une des revendications précédentes, **caractérisé en ce que** sont prévus des moyens pour empêcher un déclenchement du dispositif d'arrêt (33) lorsqu'est interrompu le rayon lumineux (22), situé le plus loin de la partie de machine déplacable (10), du dispositif à barrière lumineuse, au-dessous de la vitesse limite qui peut être prédéfinie, une désactivation complète du dispositif d'arrêt (32) ne s'effectuant qu'après franchissement d'une distance (s) qui peut être prédéfinie, par la partie de machine déplaçable (10), après passage de sa vitesse de travail au-dessous de la vitesse limite (Vo).

12. Dispositif de protection selon la revendication 11, **caractérisé en ce que** la distance (s) qui peut être prédéfinie correspond ou est inférieure à la distance entre le rayon lumineux (22) le plus éloigné de la partie de machine déplaçable (10) et le rayon lumineux immédiatement suivant (23).
